# EUROPEAN PATENT APPLICATION

(11) **EP 2 076 072 A2**
(43) Date of publication of application: **01.07.2009**
(21) Application number: 08165570.6
(22) Date of filing: 01.10.2008
(51) Int. Cl.: H04W 12/02, H04W 12/04, H04L 29/06

(54) **Wireless communication system and wireless communication device**

(30) Priority: 28.12.2007 JP 2007339420
(71) Applicant: Fujitsu Limited, Kawasaki-shi, Kanagawa 211-8588 (JP)
(72) Inventor: Okamoto, Shinya, Fukuoka-shi, Fukuoka 814-8588 (JP); Obuchi, Kazuhisa, Kawasaki-shi, Kanagawa 211-8588 (JP); Suzuki, Masaaki, Kawasaki-shi, Kanagawa 211-8588 (JP); Otonari, Akihide, Fukuoka-shi, Fukuoka 814-8588 (JP); Soejima, Yoshinori, Fukuoka-shi, Fukuoka 814-8588 (JP); Yamasaki, Miki, Fukuoka-shi, Fukuoka 814-8588 (JP); Shinohara, Chiaki, Fukuoka-shi, Fukuoka 814-8588 (JP)
(74) Representative: Stebbing, Timothy Charles

(57) **Abstract**

In a LTE-based wireless communication system, a wireless receiver includes a ciphering processing section (12) that applies a deciphering process to ciphered packet data based on a deciphering key held by a key holding part (122) and a count value sequentially updated by a counting part (123). The ciphering processing section (12) further comprises a success/failure determining part (124) that determines success/failure of the deciphering process and a query part (125) that queries a transmitting wireless communication device about a resynchronization count value when a failure of the deciphering process is determined, and that receives the resynchronization count value from the transmitting wireless communication device. The counting part (123) sequentially updates the count value with the received resynchronization count value as an initial value. The ciphering processing section (12) executes a deciphering process of packet data using the sequentially updated count value.

## Description

The present invention relates to a wireless communication system including a wireless communication device of a data transmitter as well as a wireless communication device of a data receiver and a wireless communication device having features in a data receiver, as well as to a wireless communication method and a program therefor.

In recent years, a protocol of a wireless communication system called 3G (3rd generation) is widely employed.

Japanese Patent Application Publication No. 2006-114999 discusses a system that performs packet communication and that performs synchronization to restore an IP (Internet Protocol) header of a packet when a communication error occurs in a terminal device with an IP header compression function.

The 3G has some developmental stages. In addition to a cellular phone employing the original 3G, a cellular phone employing 3.5G with a further higher communication speed or a protocol called HSDPA has entered the field. Furthermore, Super 3G or 3.9G, or a protocol called LTE (Long Term Evolution) is currently under review.

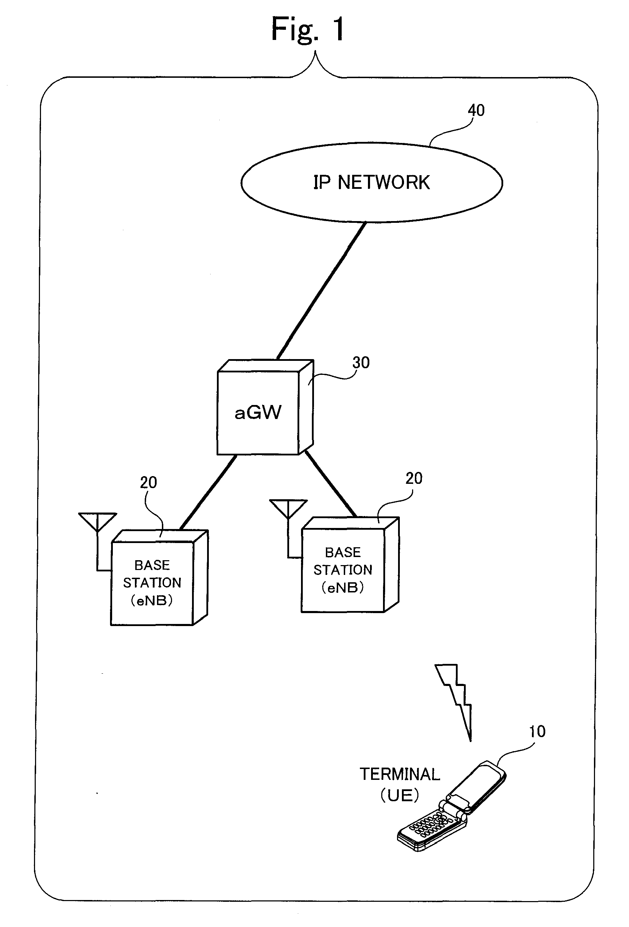

Fig. 1 is a schematic diagram of a wireless communication system employing the LTE protocol.

A terminal (UE; User Equipment) 10 wirelessly communicates with a base station (eNB; evolved Node B) 20 in accordance with the LTE protocol. The base station (eNB) 20 is connected to an IP network 40 through an access gateway (aGW) 30 that intermediates a operation of data between the base stations (eNB) 20 and the IP network 40. Although only one aGW 30 is illustrated in Fig. 1, a large number of aGWs are connected to the IP network 40, and one or multiple eNBs exist under each aGW. Although only one UE 10 is illustrated in Fig. 1, a large number of UEs exist, and the UEs can intercommunicate through the eNB, the aGW, and the IP network 40.

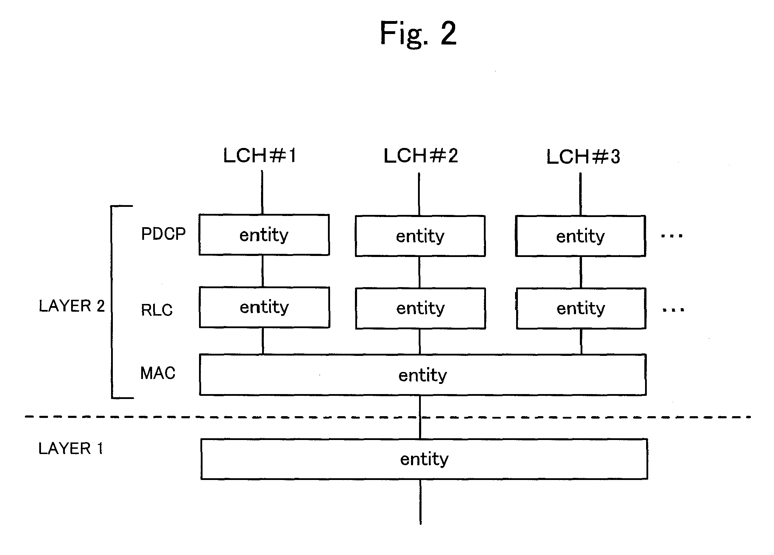

Fig. 2 is a protocol configuration diagram of the LTE protocol.

The protocol in the wireless communication system of the 3G group is divided into multiple layers, and the same holds for the LTE protocol.

A layer 1 is a layer called a physical layer, and the layer 1 is a portion that performs the actual communication.

Layers 2 located on the upper side of the layer 1 are constituted by three sub-layers including a MAC (Medium Access Control) sub-layer, an RLC (Radio Link Control) sub-layer, and a PDCP (Packet Data Convergence Protocol) sub-layer.

A block of processing functions arranged in a layer or a sub-layer is called an entity. PDCP entities and RLC entities exist by the number of logical channels used in accordance with each logical channel (LCH; Logical Channel) and transmit and receive a PDU (Protocol Data Unit). In case of the LTE protocol, a data ciphering process and a data interface process with a further upper layer (not shown) are executed in a PDCP entity. A data conversion process and a retransmission process that requests a retransmission of insufficient data are executed in an RLC entity.

A MAC entity multiples the PDUs transmitted from the RLC entities into one PDU and forwards the PDU to the layer 1. On the receiver side, the MAC entity divides the PDU transmitted from the layer 1 into PDUs of respective logical channels and transmits the divided PDUs to the RLC entities of corresponding logical channels.

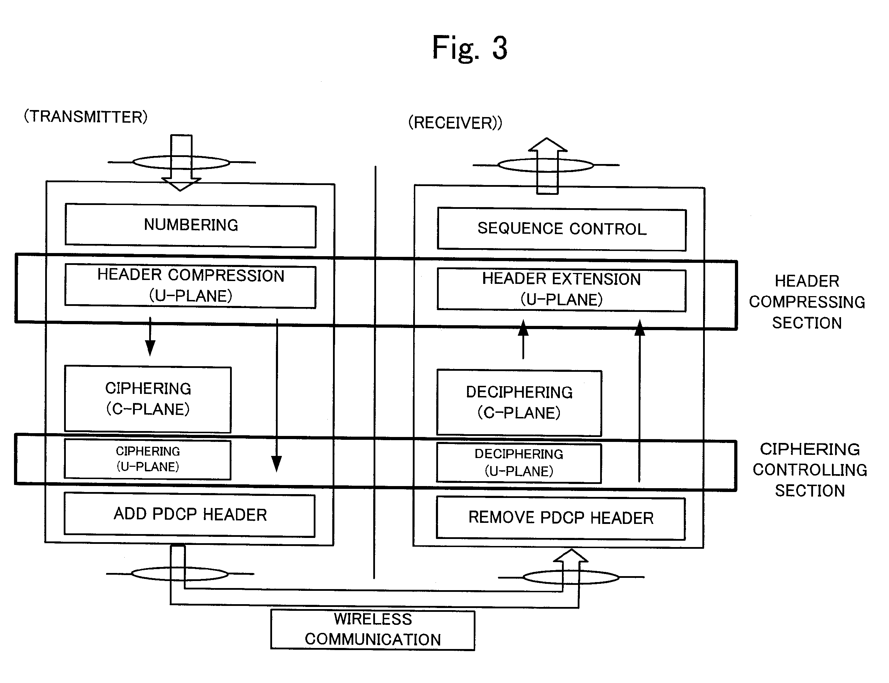

Fig. 3 is a diagram illustrating a summary of processing in a PDCP sub-layer.

The base station (eNB) 20 will be described as a transmitter, and the terminal (UE) 10 will be described as a receiver.

Each of the PDUs handled herein includes a data PDU called a U-plane and a control PDU called a C-plane.

The transmitter, receiving the PDU from the upper side (aGW side), numbers the PDU and compresses (e.g. encodes) the IP header of the U-plane PDU. The transmitter then ciphers (encrypts) PDUs that should be ciphered or skips a ciphering process for the PDUs that do not have to be ciphered. The transmitter further adds each of PDCP headers corresponding to each of the PDUs and sends out the PDUs from the PDCP sub-layer.

The ciphering is divided into a C-plane ciphering process and a U-plane ciphering process, and a suitable ciphering is performed respectively. The PDUs sent out from the PDCP sub-layer are wirelessly transmitted through an RLC sub-layer, a MAC sub-layer, and the layer 1 shown in Fig. 2.

Meanwhile, in the receiver, the PDUs transmitted from the transmitter are sent into the PDCP sub-layer of the receiver through the layer 1, the MAC sub-layer, and the RLC sub-layer of the receiver. In the PDCP sub-layer of the receiver, the PDCP header is first removed, the transmitted ciphered PDUs are then deciphered, a decompressing process is applied to the IP header, and the PDUs are sent out to the upper side through a sequence control for rearranging the PDUs in order of numbering.

In a deciphering process of the receiver, each of the PDUs is divided into the C-plane and the U-plane as each of the PDUs is divided into the C-plane and the U-plane in the ciphering process in the transmitter.

In order for the receiver to execute an IP header decompressing process, a method is employed which includes 3 operations : a first operation in which the receiver receives the transmission of decompressing process information necessary for the decompressing process from the transmitter at an early stage of the transmissions of a series of PDUs; a second operation in which the receiver receives transmission of a compressed IP header in relation to the series of PDUs; and a third operation in which the receiver decompresses the compressed IP header using the decompressing process information received in advance. The receiver determines whether the IP header is normally (successfully) decompressed. If the decompression has failed, the failure is informed to the transmitter. The receiver obtains new decompressing process information from the transmitter because the decompressing process information obtained in advance may be broken (faulty). The receiver then executes the decompressing process using the obtained new decompressing process information. The compressing and decompressing processes of the IP header are executed using the decompressing process information that differs depending on a series of PDU groups having IDs (identifiers) called CID.

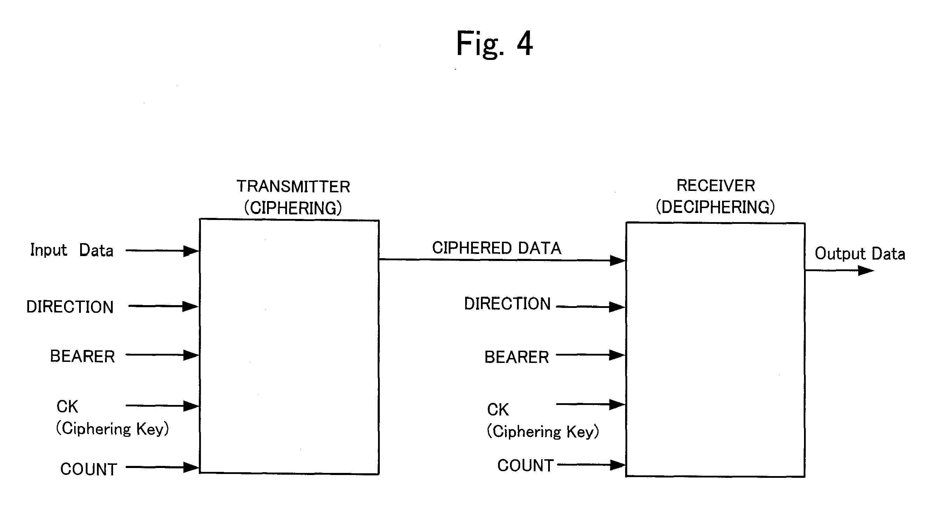

Fig. 4 is a diagram illustrating a summary of a ciphering (encryption) process of the U-plane.

A ciphering process of the C-plane is not part of the invention and the detailed description will be omitted.

In order for the transmitter to cipher Input Data, DIRECTION indicative of transmission and reception directions (from base station to terminal or from terminal to base station), BEARER indicative of logical channel to be ciphered, a key CK (Ciphering Key) for ciphering, and a count value COUNT that is sequentially updated are used.

The ciphered PDU (ciphered data) is transmitted to the receiver. And the receiver deciphers the ciphered data by using information the same as or corresponding to the information (i.e. DIRECTION, BEARER, CK, and COUNT) that is used for the ciphering by the transmitter. The CK is preset from RRC that is placed in a further upper level in advance. In this ciphering/deciphering system, the COUNT value that is sequentially updated by the transmitter and the COUNT value that is sequentially updated by the receiver need to be synchronised (harmonious). Therefore, the transmitter and the receiver intercommunicate to share the count value as an initial value and then independently update the count values while synchronizing with each other.

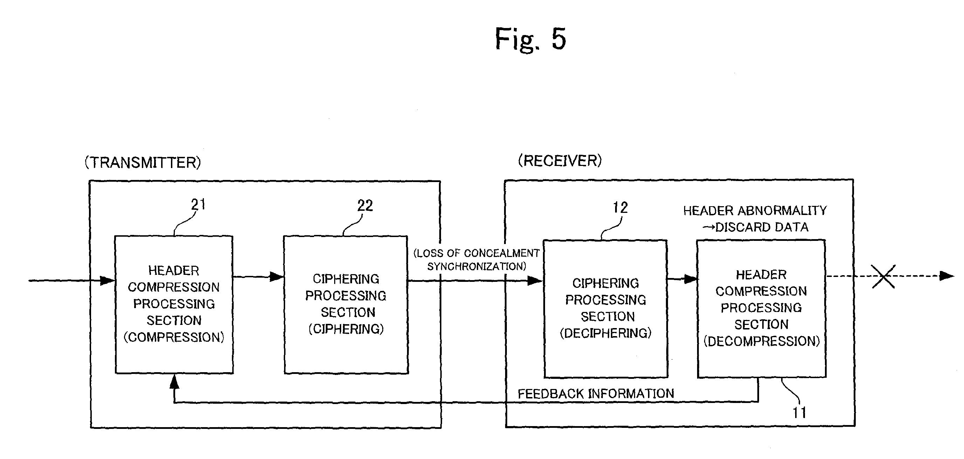

Fig. 5 is an explanatory view of a problem with the above communication system.

As described, in the wireless communication device of the transmitter, a header compression processing section (compression) 21 executes a compression process of the IP header, and a ciphering processing section (ciphering) 22 ciphers the IP header and transmits the IP header to the receiver. In the wireless communication device of the receiver, a ciphering processing section (deciphering) 12 deciphers the IP header, and a header compression processing section (decompression) 11 executes a decompressing process of the IP header. For some reason such as when the control PDU is not normally transmitted between the transmitter and the receiver, a loss of ciphering synchronization such as that the updates of the count values of the transmitter and the receiver are not harmonious (out of sync) may occur.

As for the IP header, a failure of the decompressing process is feedback to the transmitter, and a recovery can be made by obtaining new decompressing process information. However, as for the ciphering process, the content of the received PDU is not originally known in the receiver. Therefore, there is no way to directly determine whether the ciphering process has succeeded or failed even when a loss of ciphering synchronization has occurred. The deciphering process is routinely executed even when a loss of ciphering synchronization has occurred, and the subsequent IP header decompression process is executed in that condition. If the deciphering process has failed, the IP header decompressing process is also unsuccessful. If the header decompression is unsuccessful, the current data is discarded as the IP header decompressing process has failed. Although the failure of the IP header decompressing process is fed back to the transmitter, a recovery is impossible if there is a problem on the encryption (ciphering processing) side. In this case, a normal communication cannot be recovered until the upper side (supervisory layer) recognizes the abnormality and performs a reset.

The present invention has been made in view of the above circumstances and embodiments thereof may provide a wireless communication system and a wireless communication device capable of a quick recovery even when a ciphering process has failed.

A wireless communication system according to the invention includes:
a first wireless communication device; and
a second wireless communication device,
wherein
the first wireless communication device includes:
a first wireless communication section that wirelessly communicates with the second wireless communication device; and
a first ciphering processing section including;
a first key holding part that holds a ciphering key, and
a first counting part that sequentially updates a count value,
the first ciphering processing section applying a ciphering process to packet data based on both the ciphering key held by the first key holding part and the count value sequentially updated by the first counting part, and
the first ciphering processing section transmitting ciphered packet data obtained by the ciphering process to the second wireless communication device through the first wireless communication section,
the second wireless communication device includes:
a second wireless communication section that wirelessly communicate with the first wireless communication device; and
a first deciphering processing section including;
a second key holding part that holds a deciphering key corresponding to the ciphering key, and
a second counting part that sequentially updates a count value in synchronization with the update of the count value by the first counting part,
the first deciphering processing section applying a deciphering process to the ciphered packet data received through the second wireless communication section based on the deciphering key held by the second key holding part and the count value sequentially updated by the second counting part,
the first deciphering processing section further includes:
a success/failure determining part that determines success/failure of the deciphering process; and
a query part that queries the first wireless communication device about a resynchronization count value through the second wireless communication section when the success/failure determining part determines that the deciphering process has failed,
the first ciphering processing section further includes:
an informing part that informs the resynchronization count value to the second wireless communication device through the first wireless communication section in response to the query about the resynchronization count value received from the first wireless communication device,
the first counting part sequentially updates the count value with the resynchronization count value being informed the second wireless communication device as an initial value while the first ciphering processing section executes a ciphering process of packet data using the sequentially updated count value, and
the second counting part sequentially updates the count value in synchronization with the update of the count value by the first counting part with the resynchronization count value received from the first wireless communication device as an initial value while the first deciphering processing section executes a deciphering process of the packet data using the sequentially updated count value.

The wireless communication system determines success/failure of the deciphering process, queries and obtains the resynchronization count value when the deciphering process has failed. Therefore, a quick recovery is possible even when a loss of ciphering synchronization has occurred and the deciphering process has failed.

In the wireless communication device according to an aspect of an embodiment, preferably, the another wireless communication device and the wireless communication device includes first key acquiring sections and second key acquiring sections that intercommunicate and that acquire ciphering keys and deciphering keys corresponding to each other respectively, and
the second key acquiring section communicates with the first key acquiring section in response to a failure of the deciphering process in the deciphering processing section to reacquire the deciphering key and hands over the deciphering key to the first deciphering processing section.

In this case, the second key acquiring section may reacquire the deciphering key when determinations of failures of the deciphering process by the success/failure determining part have continued for a predetermined number of times.

A main reason of the failure of the deciphering may be a loss of synchronization, but may also be a corruption of the key. Even in that case, a recovery can be made by reacquiring the key.

In the wireless communication device according to an aspect of an embodiment, preferably, the wireless communication device further includes a second ciphering processing section including third key holding part that holds a ciphering key and third counting part that sequentially updates a count value, the second ciphering processing section applying a ciphering process to packet data based on the ciphering key held by the third key holding part and the count value sequentially updated by the third counting part and the second ciphering processing section transmitting the ciphered packet data obtained by the ciphering process to the another wireless communication device through the second wireless communication section,
the another wireless communication device further includes a second deciphering processing section including fourth key holding part that holds a deciphering key and fourth counting part that sequentially updates the count value in synchronization with the update of the count value by the third counting part, the second deciphering processing section applying a deciphering process to the received ciphered packet data based on the deciphering key held by the fourth key holding part and the count value sequentially updated by the fourth counting part, and
when querying the another wireless communication device about the resynchronization count value, the query part informs the another wireless communication device of the current count value updated by the third counting part and the query.

A wireless communication device usually includes both of the transmitting and receiving functions, and when the deciphering upon reception has failed, the possibility of failing the deciphering by the communicating party is increased when the wireless communication device becomes the transmitter. The failure of deciphering by the other party can be simultaneously recovered, without waiting for the notification of failure of deciphering from the other party in a case where a failure of deciphering has occurred in the receiver when the other party, i.e. the wireless communication device, operates as the transmitter, by informing the count value at the time the wireless communication device operates as the transmitter to the receiver upon querying the receiver about the resynchronization count value after the failure of deciphering.

In the wireless communication system according to an aspect of an embodiment, preferably, the another wireless communication device includes a header compressing section that compresses a header of packet data before the ciphering process,
the wireless communication device includes a header decompressing section that decompresses the header of the packet data after the deciphering process by the deciphering processing section,
the header compressing section informs the wireless communication device of the decompressing process information necessary for the decompressing process of the header of each group of packet data having a common identifier prior to the compressing process of the header of the group of packet data and in response to a request from the wireless communication device,
the header decompressing section requests a retransmission of the decompressing process information to the another wireless communication device through the second wireless communication section when the decompressing process of the header of the packet data has failed, and
the success/failure determining part determines that the deciphering process has failed when the header decompressing section fails decompressions of the headers of a plurality of types of packet data each having each of a plurality of types of identifiers.

It is difficult to determine whether the decompressing process has failed or the deciphering process has failed if the decompression of the header has failed only once. It may be determined that the deciphering process has also failed based on the fact that the decompression of the header has failed once, and measures for the recovery of the deciphering process may also be taken. However, this may cause an overreaction and make waste. On the other hand, as described, when multiple types of packet data having different identifiers are received, it can be determined that the deciphering process has failed based on the fact that the decompressions of the headers of the multiple types of packet data have failed. As a result, a failure of the deciphering process can be distinguished from a failure of the decompression of the IP header, allowing an accurate determination.

In the wireless communication device according to an aspect of an embodiment, preferably, the another wireless communication device includes a header compressing section that compresses the header of the packet data before the ciphering process,
the wireless communication device includes a header decompressing section that decompresses the header of the packet data after the deciphering process by the deciphering processing section,
the header compressing section informs the wireless communication device of the decompressing process information necessary for the decompressing process of the header of the packet data prior to the compressing process of the header of the packet data and in response to a request from the wireless communication device,
the header decompressing section requests a retransmission of the decompressing process information to the another wireless communication device through the wireless communication section when the decompressing process of the header of the packet data has failed, and
the success/failure determining part determines that the deciphering process has failed when the retransmissions of the decompressing process information and the failures of the decompressing process of the header have been repeated for a predetermined number of times in the header decompressing section.

According to the determination algorithm, a failure of the deciphering process can be determined distinctly from a failure of the decompressing process of the IP header even when, for example, packet data of only one type of identifier is received.

In the wireless communication device according to an aspect of an embodiment, it is acceptable that the another wireless communication device includes a header compressing section that compresses the header of the packet data before the ciphering process,
the wireless communication device includes a header decompressing section that decompresses the header of the packet data after the deciphering process by the deciphering processing section,
the header compressing section informs the wireless communication device of decompressing process information necessary for the decompressing process of the header of the packet data prior to the compressing process of the header of the packet data and in response to a request from the wireless communication device,
the header decompressing section requests a retransmission of the decompressing process information to the first wireless communication device through the second wireless communication section when the decompressing process of the header of the packet data has failed,
the header compressing section retransmits the decompressing process information and transmits a test pattern after ciphering the test pattern, when receiving the retransmission request of the decompressing process information from the wireless communication device, and
the success/failure determining part determines success/failure of the deciphering process by the deciphering processing section in accordance with success/failure of the deciphering process of the ciphered test pattern transmitted from the another wireless communication device.

In this way, when the decompressing process of the header has failed, a failure of the deciphering process can be determined distinctly from a failure of the decompressing process of the IP header by not only retransmitting the decompressing process information necessary for the decompression of the header from the transmitter, but also by ciphering and transmitting the test pattern for determining success/failure of the deciphering process and by deciphering the test pattern at the receiver.

Additionally, for example, the same information as the IP header may be embedded into the payload data (part other than the header, in this case, it can be recognized that the IP header is the test pattern). Alternatively, error detection data such as CRC for all or part of the payload data may be generated and embedded into the payload data. An aspect of an embodiment may also employ a determination algorithm of the deciphering process other than the one illustrated above.

A wireless communication device according to an aspect of an embodiment includes:
a wireless communication section that wirelessly communicates with another wireless communication device; and
a deciphering processing section including key holding part that holds a deciphering key and counting part that sequentially updates a count value, the deciphering processing section applying a deciphering process to ciphered packet data received through the wireless communication section based on the deciphering key held by the key holding part and the count value sequentially updated by the counting part, wherein
the deciphering processing section further includes:
   success/failure determining part that determines success/failure of the deciphering process; and query part that queries the another wireless communication device about a resynchronization count value through the wireless communication section when the success/failure determining part determines that the deciphering process has failed and that receives the resynchronization count value from the another wireless communication device, and
      the counting part sequentially updates the count value with the resynchronization count value received from the another wireless communication device as an initial value while the deciphering processing section executes a deciphering process of packet data using the sequentially updated count value.

Here, the wireless communication device according to an aspect of an embodiment may further include a key acquiring section that acquires a deciphering key through the wireless communication section, wherein
the key acquiring section reacquires the deciphering key in response to a failure of the deciphering process in the deciphering processing section and hands over the deciphering key to the deciphering processing section. In this case, the key acquiring section may reacquire the deciphering key when the determinations of failures of the deciphering process by the success/failure determining part have continued for a predetermined number of times.

Also, the wireless communication device according to an aspect of an embodiment preferably further includes a ciphering processing section including second key holding part that holds a ciphering key and second counting part that sequentially updates a count value, the ciphering processing section applying a ciphering process to packet data based on the ciphering key held in the second key holding part and the count value sequentially updated by the second counting part and the ciphering processing section transmitting ciphered packet data obtained by the ciphering process to the another wireless communication device through the wireless communication section, wherein
when querying the another wireless communication device about the resynchronization count value, the query part informs the another wireless communication device of the current count value updated by the second counting part and the query.

According to an aspect of an embodiment, when the deciphering in the ciphering process has failed, the failure can be quickly recovered without waiting for an instruction of reset from the upper level.

Other aspects of the present invention provide a wireless communication method and a program as defined in the claims.

Reference is made, by way of example only, to the accompanying drawings in which:
Fig. 1 is a schematic diagram of a wireless communication system when an LTE protocol is employed;
Fig. 2 is a protocol configuration diagram of the LTE protocol;
Fig. 3 is a diagram illustrating a summary of a process in a PDCP sub-layer;
Fig. 4 is a diagram illustrating a summary of a ciphering process of a U-plane;
Fig. 5 is an explanatory view of a problem of the communication system;
Fig. 6 is an explanatory view of a ciphering process of the wireless communication system of an embodiment of the present invention;
Fig. 7 is a schematic diagram of the communication system in the present embodiment;
Fig. 8 is a schematic diagram of the communication system in the present embodiment;
Fig. 9 is a operation chart showing a first example of a deciphering success/failure determination algorithm;
Fig. 10 is a operation chart showing a second example of the deciphering success/failure determination algorithm; and
Fig. 11 is a operation chart showing a third example of the deciphering success/failure determination algorithm.

Embodiments of the present invention will now be described.

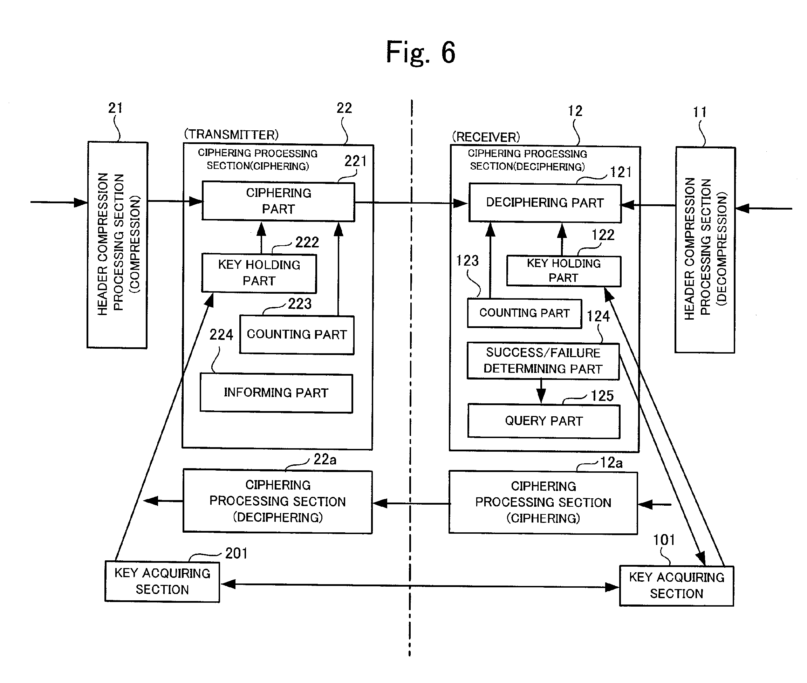

Fig. 6 is an explanatory view of a ciphering process of a wireless communication system of an embodiment.

The description of the points in common with the conventional example described above will be simplified or omitted herein, and differences from the conventional example will be mainly described.

A wireless communication device of the transmitter and a wireless communication device of the receiver include key acquiring sections 201 and 101 respectively and intercommunicate through wireless communication sections of the transmitter and the receiver placed on a layer 1. The key acquiring section 201 of the transmitter acquires a ciphering (encryption) key, while the key acquiring section 101 of the receiver acquires a deciphering key. A key holding part 222 of the ciphering processing section (ciphering) 22 of the transmitter holds a ciphering key, while the key holding part 122 of the ciphering processing section (deciphering) 12 of the receiver holds a deciphering key.

The ciphering key and the deciphering key may be the same keys depending on the system. The keys may also be different as long as the keys are a pair in which data ciphered by using the ciphering key can be deciphered by using the deciphering key.

The ciphering processing section 22 of the transmitter and the ciphering processing section 12 of the receiver include counting parts 223 and 123, respectively. The counting part 223 and 123 first start from the same or corresponding initial values, synchronize mutually and sequentially update (i.e., increment) their count values.

The transmitter receives IP packets from the upper side, and the header compression processing section (compression) 21 executes a compressing process of the IP header. The ciphering part 221 of the ciphering processing section 22 executes a ciphering process using the ciphering key held by the key holding part 222 and the current count value in the counting part 223.

The ciphered data is transmitted to the receiver. In the ciphering processing section 12 of the receiver, the deciphering part 121 executes a deciphering process to the received data using the deciphering key held by the key holding part 122 and the current count value of the counting part 123.

As described with reference to Fig. 4, DIRECTION and BEARER are also used for ciphering and deciphering in case of the actual LTE protocol. However, DIRECTION and BEARER are not essential items in the present embodiment, and descriptions thereof are omitted.

The data deciphered by the deciphering part 121 of the ciphering processing section 12 of the receiver is applied with a decompressing process of the IP header in the header compression processing section (decompression or decoding) 11 and handed over to the upper side.

As described, in the header compression processing section 11 of the receiver, a failure of the decompressing process of the IP header is informed to the transmitter, the decompressing process information necessary for the decompressing process is reacquired from the transmitter, and the decompressing process of the IP header is executed using the reacquired decompressing process information.

The ciphering processing section 12 of the receiver includes a success/failure determining part 124, which will be described in detail later, configured to determine success/failure of the deciphering process. If the success/failure determining part 124 determines that the deciphering process has failed, a query part 125 queries the transmitter about a resynchronization count value. Meanwhile, the ciphering processing section 22 of the transmitter includes an informing part 224. The informing part 224 responds to the query of the resynchronization count value received from the receiver and informs the resynchronization count value to the receiver.

Once the informing part 224 informs the receiver of the resynchronization count value, a counting part 223 of the transmitter increments (sequentially updates) the count value based on the resynchronization count value informed to the receiver as the initial value, and the ciphering part 221 executes the ciphering process for the packet data using the sequentially updated count value. Similarly, in the counting part 123 of the receiver, the count value is incremented (sequentially updated) in synchronization with the update of the count value by the counting part 223 of the transmitter with the resynchronization count value received from the transmitter as the initial value, and the deciphering part 121 executes the deciphering process of the packet data using the sequentially updated count value.

The wireless communication devices mutually perform both of the transmission and reception. Therefore, the wireless communication device of the receiver also includes equipment allowing the wireless communication device to act as the transmitter, i.e. equipment with the same configurations as the header compression processing section (compression/encoding) 21 and the ciphering processing section (ciphering/encrypting) 22 of the transmitter illustrated in Fig. 6. The wireless communication device of the transmitter can also act as a receiver, and thus includes the same equipment as the ciphering processing section (deciphering) 12 and the header compression processing section (decompression) 11 of the receiver shown in Fig. 6. Among the equipment, Fig. 6 illustrates a ciphering processing section (deciphering) 22a as for the transmitter illustrated in Fig. 6 and a ciphering processing section (ciphering) 12a as for the receiver illustrated in Fig. 6.

When the success/failure determining part 124 determines that the deciphering process has failed, the query part 125 queries the transmitter about the resynchronization count value, and the current count value of a counting part (not shown) included in the ciphering processing section (ciphering) 12a of the wireless communication device of the receiver is also informed to the transmitter. This is because there is a possibility that a loss of synchronization has occurred in the communication for transmitting in the opposite direction from the receiver to the transmitter shown in Fig. 6 when a loss of synchronization in counting related to the transmission from the transmitter to the receiver shown in Fig. 6 has occurred. It is possible to accelerate a recovery by transmitting the count value without waiting for the query from the other party in case of a loss of synchronization in the communication in the opposite direction.

In addition, when the success/failure determining part 124 determines that the deciphering by the deciphering part 121 has failed even after the resynchronization count value is obtained and the count values are resynchronized between the transmitter and the receiver as described, the failure of the deciphering is informed to the key acquiring section 101 of the receiver, and the key acquiring section 101 of the receiver communicates with the key acquiring section 201 of the transmitter to reacquire the deciphering key and hands over the deciphering key to the key holding part 122. If a new ciphering key is to be used, the key acquiring section 201 of the transmitter hands over the new ciphering key to the key holding part 222. Subsequently, the ciphering part 221 performs ciphering using the obtained new ciphering key, and the deciphering part 121 performs deciphering using the obtained new deciphering key. In this way, correct decryption can be re-established.

The reacquisition of the deciphering key may be performed when the success/failure determining part 124 repeatedly determines failures of the deciphering even after a predetermined number of times of acquisitions of the resynchronization count values.

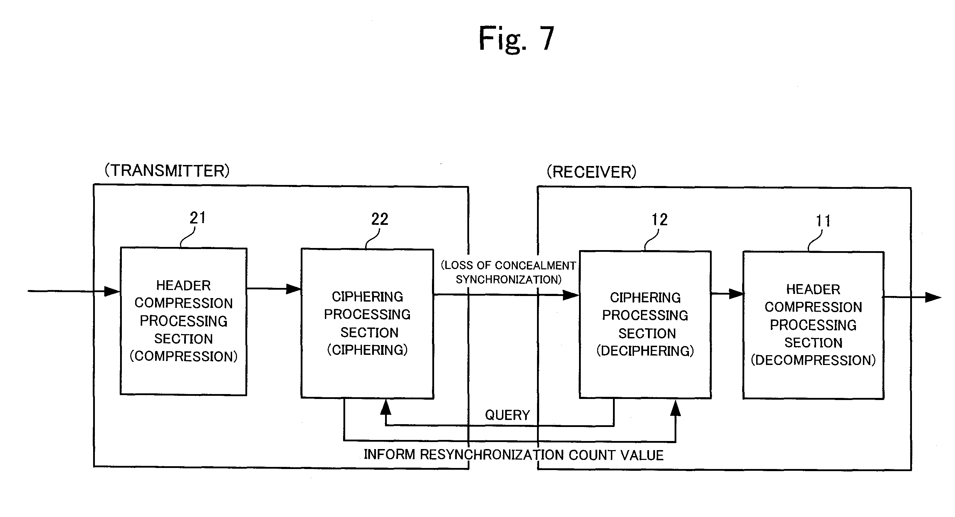

Fig. 7 is a schematic diagram of the communication system of the present embodiment and illustrates a first-stage deciphering recovery measure.

When a loss of ciphering synchronization has occurred and it is determined that the deciphering has failed in the ciphering processing section 12 of the receiver, the receiver queries the transmitter about the resynchronization count value, and the transmitter informs the receiver of the resynchronization count value. This enables to recover the synchronization and to again perform a normal deciphering, if the failure of the deciphering is caused by a loss of synchronization between the ciphering count value of the transmitter and the deciphering count value of the receiver.

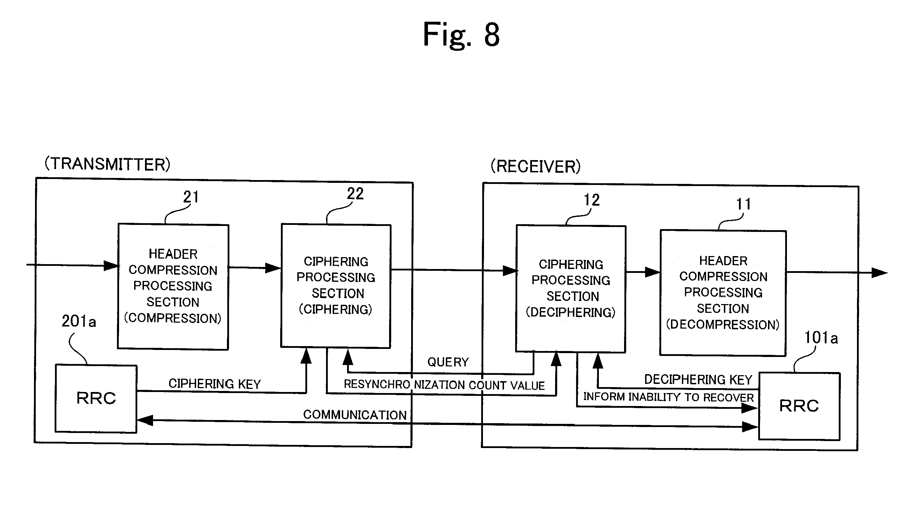

Fig. 8 is a schematic diagram of the communication system of the present embodiment and illustrates a second-stage deciphering recovery measure.

As described with reference to Fig. 7, when it is determined that the deciphering has failed in the ciphering processing section 12 of the receiver, the receiver first queries the transmitter about the resynchronization count value and receives a notification of the resynchronization count value from the transmitter, thereby recovering the synchronization of the count values to attempt decoding. If the deciphering is still unsuccessful, the receiver again queries for the resynchronization count value and again obtains the resynchronization count value to attempt decoding. If the deciphering is not successful after the process is repeated for a predetermined number of times, the fact that the recovery of the deciphering is impossible is informed to an RRC (Radio Resource Control) layer 101a of the receiver. The RRC 101a of the receiver then communicates with an RRC 201a of the transmitter to acquire a new deciphering key and hands over the new deciphering key to the ciphering processing section 12. The RRC 201a of the transmitter also acquires a new ciphering key and hands over the new ciphering key to the ciphering processing section 22.

As described, in the present embodiment, if the deciphering is still unsuccessful even after the first stage deciphering recovery measure, the second-stage deciphering recovery measure is taken.

In the LTE protocol, the RRCs 101a and 201a serve as the key acquiring sections 101 and 201 shown in Fig. 6.

Next, a determination algorithm of failure of deciphering in the success/failure determining part 124 shown in Fig. 6 will be described.

The content of the IP header that is compressed by the header compression processing section (compression) 21 and that is decompressed by the header compression processing section (decompression) 11 shown in Fig. 6 can be examined. Therefore, whether the decompression has succeeded can be determined. However, the part of the payload other than the header in the transmitted data is data arbitrarily created by the user. Therefore, even if the data after the deciphering by the a deciphering part 121 is examined, whether the data is correctly deciphered or the deciphering has failed cannot be directly determined.

In addition, even if the failure of the decompression of the IP header is verified, only the decompression of the IP header may have failed and the deciphering may have been successful. Therefore, a failure of the decompression of the IP header does not necessarily mean a failure of deciphering.

Thus, a determination algorithm described below is employed in the present embodiment.

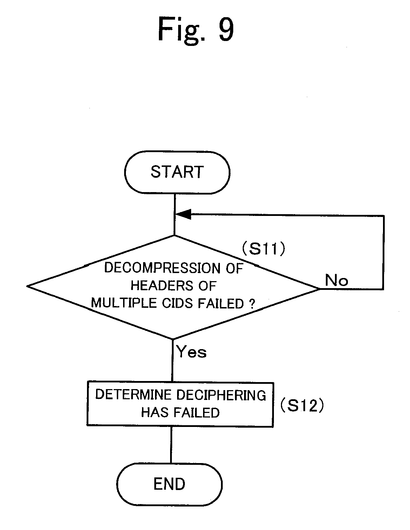

Fig. 9 is a operation chart showing a first example of a deciphering success/failure determination algorithm.

As described, a unique identifier called CID is provided to each related group of packet data transmitted from the transmitter to the receiver. The header compression processing section (compression) 21 of the transmitter hands over, for each CID, decompressing process information necessary for the decompressing process of the IP header to the header compression processing section 11 of the receiver illustrated in Fig. 6.

After the decompressions of the IP headers with respect to all the packet data of predetermined multiple number of CIDs have all failed (operation S11), the success/failure determining part determines that the deciphering has failed (operation S12). This is because it is unlikely that the reason for the simultaneous failures of the decompressions of the IP headers with respect to the packet data of the multiple CIDs is anything other than the failure of the deciphering.

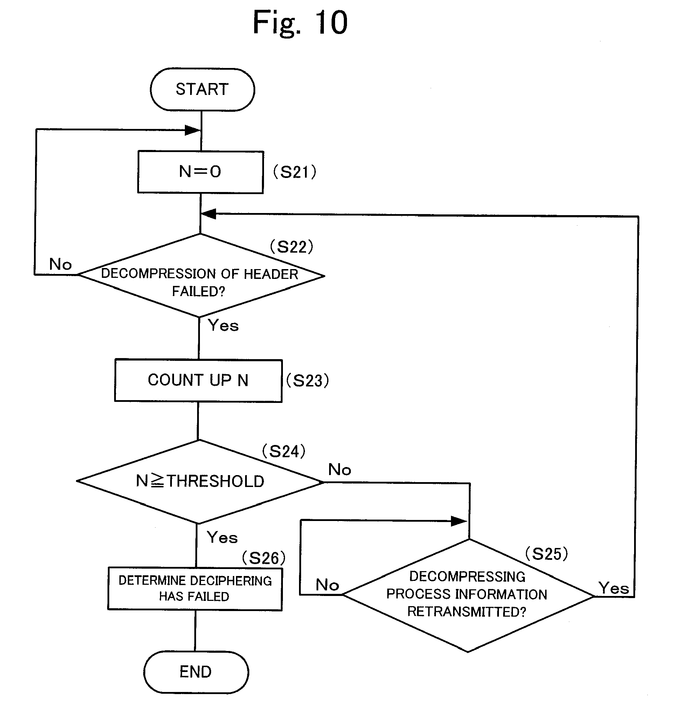

Fig. 10 is a operation chart showing the second example of the deciphering success/failure determination algorithm.

A count value N for showing the number of failures of deciphering is first cleared to zero (operation S21), and whether the decompression of the IP header has failed is determined (operation S22). If the decompression of the IP header has succeeded, N is again cleared to zero (operation S21).

The count value N is counted up when the decompression of the IP header has failed (operation S23), and whether N has reached a threshold is determined (operation S24). If N has not reached the threshold yet, the process waits for the retransmission of the decompressing process information for decompressing the IP header (operation S25), and success/failure of the decompression of the IP header is determined using the acquired new decompressing process information (operation S22). If the decompression has failed again, N is further counted up (operation S23), and N and the threshold are compared (operation S24). If N has reached the threshold, the deciphering is determined to be failed (operation S26).

With the determination algorithm, the failure of the deciphering can be determined distinctly from the failure of the decompression of the IP header even when packet data of only one type of CID is transmitted and received.

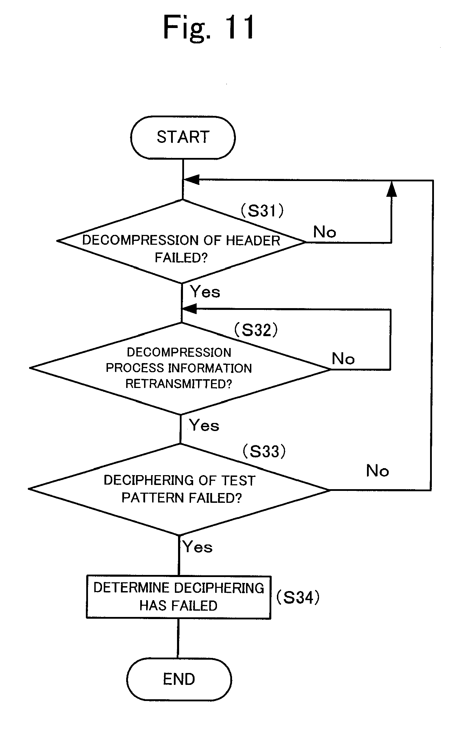

Fig. 11 is a operation chart showing a third example of the deciphering success/failure determination algorithm.

The success/failure of the decompression of the IP header is first determined (operation S31), and if a failure of the decompression of the IP header is determined, the process waits for the retransmission of the decompressing process information necessary for the decompression of the IP header (operation S32). Upon the retransmission of the decompressing process information, not only is the decompressing process information transmitted from the transmitter, but also a ciphered test pattern is created and transmitted. The test pattern is data in which a correct test pattern is transmitted to the receiver by communicating in advance or in each opportunity.

The receiver deciphers the ciphered test pattern that is received with the retransmitted decompressing process information and determines whether the deciphering of the test pattern has failed by comparing the deciphered test pattern and a known correct test pattern (operation S33). If the deciphering of the test pattern has succeeded, it is only determined to be a failure of the decompressing process of the IP header, and the deciphering is determined to be failed with the failure of the deciphering of the test pattern (operation S34).

Other than the first to third examples, another algorithm, such as embedding a CRC into the payload data, may be employed to determine success/failure of the deciphering.

## Claims

1. A wireless communication system comprising:
a first wireless communication device; and
a second wireless communication device,
wherein
the first wireless communication device comprises:
a first wireless communication section that wirelessly communicates with the second wireless communication device; and
a first ciphering processing section including;
a first key holding part that holds a ciphering key, and
a first counting part that sequentially updates a
count value,
the first ciphering processing section applying a ciphering process to packet data based on both the ciphering key held by the first key holding part and the count value sequentially updated by the first counting part, and
the first ciphering processing section transmitting ciphered packet data obtained by the ciphering process to the second wireless communication device through the first wireless communication section,
the second wireless communication device comprises:
a second wireless communication section that wirelessly communicate with the first wireless communication device; and
a first deciphering processing section including; a second key holding part that holds a deciphering key corresponding to the ciphering key, and
a second counting part that sequentially updates a count value in synchronization with the update of the count value by the first counting part,
the first deciphering processing section applying a deciphering process to the ciphered packet data received through the second wireless communication section based on the deciphering key held by the second key holding part and the count value sequentially updated by the second counting part,
the first deciphering processing section further comprises:
a success/failure determining part that determines success/failure of the deciphering process; and
a query part that queries the first wireless communication device about a resynchronization count value through the second wireless communication section when the success/failure determining part determines that the deciphering process has failed,
the first ciphering processing section further comprises:
an informing part that informs the resynchronization count value to the second wireless communication device through the first wireless communication section in response to the query about the resynchronization count value received from the first wireless communication device,
the first counting part sequentially updates the count value with the resynchronization count value being informed the second wireless communication device as an initial value while the first ciphering processing section executes a ciphering process of packet data using the sequentially updated count value, and the second counting part sequentially updates the count value in synchronization with the update of the count value by the first counting part with the resynchronization count value received from the first wireless communication device as an initial value while the first deciphering processing section executes a deciphering process of the packet data using the sequentially updated count value.

2. A wireless communication device comprising:
a wireless communication section that wirelessly communicates with another wireless communication device; and
a deciphering processing section including:
a key holding part that holds a deciphering key, and
a counting part that sequentially updates a count value, the deciphering processing section applying a
deciphering process to ciphered packet data received through the wireless communication section based on the deciphering key held by both the key holding part and
the count value sequentially updated by the counting part, wherein
the deciphering processing section further comprises:
a success/failure determining part that determines
success/failure of the deciphering process; and
a query part that queries the another wireless
communication device about a resynchronization count value through the wireless communication section when the success/failure determining part determines that the deciphering process has failed and that receives the resynchronization count value from the another wireless communication device, and
the counting part sequentially updates the count value with the resynchronization count value received from the another wireless communication device as an initial value while the deciphering processing section executes a deciphering process of packet data using the sequentially updated count value.

3. The wireless communication device according to claim 2, further comprising:
a key acquiring section that acquires a deciphering key through the wireless communication section, wherein the key acquiring section reacquires the deciphering key in response to a failure of the deciphering process in the deciphering processing section and hands over the deciphering key to the deciphering processing section.

4. The wireless communication device according to claim 3, wherein
the key acquiring section reacquires the deciphering key when the determinations of failures of the deciphering process by the success/failure determining part have continued for a predetermined number of times.

5. The wireless communication device according to claim 2, 3, or 4, further comprising:
a ciphering processing section including:
a second key holding part that holds a ciphering key, and
a second counting part that sequentially updates a count value,
the ciphering processing section applying a ciphering process to packet data based on the ciphering key held in the second key holding part and the count value sequentially updated by the second counting part, and
the ciphering processing section transmitting ciphered packet data obtained by the ciphering process to the another wireless communication device through the wireless communication section,
wherein
when querying the another wireless communication device about the resynchronization count value, the query part informs the another wireless communication device of the current count value updated by the second counting part and the query.

6. A wireless communication system comprising the wireless communication device according to any of claims 2 to 5 and another wireless communication device.

7. The wireless communication system according to claim 6, wherein
the another wireless communication device and the wireless communication device comprise first key acquiring sections and second key acquiring sections that intercommunicate and that acquire ciphering keys and deciphering keys corresponding to each other respectively, and
the second key acquiring section communicates with the first key acquiring section in response to a failure of the deciphering process in the deciphering processing section to reacquire the deciphering key and hands over the deciphering key to the first deciphering processing section.

8. The wireless communication system according to claim 7, wherein
the second key acquiring section reacquires the deciphering key when determinations of failures of the deciphering process by the success/failure determining part have continued for a predetermined number of times.

9. The wireless communication system according to claim 6, or 7, or 8, wherein
the wireless communication device further comprises a second ciphering processing section including:
a third key holding part that holds a ciphering key, and
a third counting part that sequentially updates a count value,
the second ciphering processing section applying a ciphering process to packet data based on the ciphering key held by the third key holding part and the count value sequentially updated by the third counting part, and
the second ciphering processing section transmitting the ciphered packet data obtained by the ciphering process to the another wireless communication device through the second wireless communication section,
the another wireless communication device further comprises
a second deciphering processing section including:
a fourth key holding part that holds a deciphering key, and
a fourth counting part that sequentially updates the count value in synchronization with the update of the count value by the third counting part,
the second deciphering processing section applying a deciphering process to the received ciphered packet data based on the deciphering key held by the fourth key holding part and the count value sequentially updated by the fourth counting part, and
when querying the another wireless communication device about the resynchronization count value, the query part informs the another wireless communication device of the current count value updated by the third counting part and the query.

10. The wireless communication system according to any of claims 6 to 9, wherein
the another wireless communication device comprises a header compressing section that compresses a header of packet data before the ciphering process,
the wireless communication device comprises a header decompressing section that decompresses the header of the packet data after the deciphering process by the deciphering processing section,
the header compressing section informs the wireless communication device of the decompressing process information necessary for the decompressing process of the header of each group of packet data having a common identifier prior to the compressing process of the header of the group of packet data and in response to a request from the wireless communication device,
the header decompressing section requests a retransmission of the decompressing process information to the another wireless communication device through the second wireless communication section when the decompressing process of the header of the packet data has failed, and
the success/failure determining part determines that the deciphering process has failed when the header decompressing section fails decompressions of the headers of a plurality of types of packet data each having each of a plurality of types of identifiers.

11. The wireless communication system according to any of claims 6 to 10, wherein
the another wireless communication device comprises a header compressing section that compresses the header of the packet data before the ciphering process,
the wireless communication device comprises a header decompressing section that decompresses the header of the packet data after the deciphering process by the deciphering processing section,
the header compressing section informs the wireless communication device of the decompressing process information necessary for the decompressing process of the header of the packet data prior to the compressing process of the header of the packet data and in response to a request from the wireless communication device,
the header decompressing section requests a retransmission of the decompressing process information to the another wireless communication device through the wireless communication section when the decompressing process of the header of the packet data has failed, and
the success/failure determining part determines that the deciphering process has failed when the retransmissions of the decompressing process information and the failures of the decompressing process of the header have been repeated for a predetermined number of times in the header decompressing section.

12. The wireless communication system according to any of claims 6 to 10, wherein
the another wireless communication device comprises a header compressing section that compresses the header of the packet data before the ciphering process,
the wireless communication device comprises a header decompressing section that decompresses the header of the packet data after the deciphering process by the deciphering processing section,
the header compressing section informs the wireless communication device of decompressing process information necessary for the decompressing process of the header of the packet data prior to the compressing process of the header of the packet data and in response to a request from the wireless communication device,
the header decompressing section requests a retransmission of the decompressing process information to the first wireless communication device through the second wireless communication section when the decompressing process of the header of the packet data has failed,
the header compressing section retransmits the decompressing process information and transmits a test pattern after ciphering the test pattern, when receiving the retransmission request of the decompressing process information from the wireless communication device, and
the success/failure determining part determines success/failure of the deciphering process by the deciphering processing section in accordance with success/failure of the deciphering process of the ciphered test pattern transmitted from the another wireless communication device.

13. A wireless communication method for performing wireless communication between one wireless communication device acting as a receiver and another wireless communication device acting as a transmitter, comprising steps of, at the receiver:
holding a deciphering key;
sequentially updating a count value;
applying a deciphering process to received ciphered packet data based on the deciphering key and the count value sequentially updated by the counting part;
determining success/failure of the deciphering process; querying the transmitter about a resynchronization count value when the success/failure determining step determines that the deciphering process has failed;
receiving the resynchronization count value from the transmitter; and
sequentially updating the count value with the resynchronization count value received from the transmitter as an initial value and executing a deciphering process of packet data using the sequentially updated count value.

14. A computer program which, when executed by a processor of a wireless communication device, performs the method according to claim 13.

15. A computer-readable medium on which is recorded the program according to claim 14.
